# FASCICULE DE BREVET EUROPEEN

(11) **EP 3 488 588 B1**
(45) Date de publication et mention de la délivrance du brevet: **18.08.2021**
(21) Numéro de dépôt: 17754398.0
(22) Date de dépôt: 20.07.2017
(51) Int. Cl.: H04L 29/06, G06F 21/62

(54) **PROCÉDÉ D'ALIMENTATION AUTOMATIQUE D'UN PROXY DE CONNEXION SÉCURISÉE**
VERFAHREN ZUR BEREITSTELLUNG EINES SICHEREN VERBINDUNGS-PROXY
METHOD FOR SUPPLYING A SECURE CONNECTION PROXY

(30) Priorité: 20.07.2016 FR 1656906
(43) Date de publication de la demande: 29.05.2019
(73) Titulaire: Wallix, 75008 Paris (FR)
(72) Inventeur: PINSON, Eric, 94120 Fontenay-Sous-Bois (FR); ADDA, Serge, 92160 Antony (FR)
(74) Mandataire: IP Trust
(86) Numéro de dépôt international: PCT/FR2017/051999
(87) Numéro de publication internationale: WO 2018/015681

(56) Documents cités:
- US-A- 5 768 519
- US-A1- 2015 200 943
- US-A1- 2015 271 200
- US-B2- 8 631 478

## Description

### Domaine de l'invention

La présente invention concerne le domaine des serveurs d'application, et plus particulièrement des procédés et des systèmes d'accès à des ressources applicatives hébergées sur un ou plusieurs serveurs, par un utilisateur.

Afin de renforcer la sécurité contre les fraudes et erreurs involontaires, les terminaux et leurs utilisateurs sont soumis à une gestion des « privilèges ».

Dans ce modèle, la sécurité est déportée du terminal ou de l'accès au système d'information vers l'utilisateur lui-même, au plus près de la donnée. Chaque utilisateur se voit ainsi attribuer un « rôle », qui va définir ses autorisations au sein du système d'information comme de l'entreprise en elle-même : droit d'accès, de modification, ou même de consultation, à chaque profil correspond un corpus d'autorisation.

Cette approche présente un double avantage : préventif d'une part, puisqu'une erreur de manipulation ou l'accès à un fichier protégé est en principe impossible ; curatif d'autre part, puisque tout comportement anormal peut être automatiquement signalé aux exploitants afin d'y apporter un correctif. Si un poste dédié à la maintenance se connecte soudainement à la comptabilité, il y a probablement une erreur ou, au pire, une tentative malveillante.

Pour donner sa pleine mesure, cette politique de gestion des privilèges doit être minutieusement définie, et surtout capable d'épouser les changements au sein de l'entreprise. Au fil de sa carrière, un collaborateur peut ainsi voir ses droits évoluer, tout comme l'intégration d'une nouvelle application peut entrainer une remise en question des privilèges établis. Plus fine sera la granularité de cette politique, plus performants seront ses résultats.

Le domaine de l'invention est plus précisément, celui des systèmes informatiques associant une pluralité de machines, avec une gestion sécurisée des accès à chacune des machines par un ou plusieurs comptes à privilèges à travers un proxy.

Les utilisateurs Administrateurs ont des « privilèges » dont les utilisateurs Standard ne disposent pas. Sans les privilèges administrateur, il est par exemple impossible d'installer des logiciels. Certains comptes utilisateur (par exemple le compte « root ») possèdent des privilèges administrateur en permanence. Les privilèges administrateur permettent de modifier des parties importantes du système si besoin, avec des sécurités empêchant l'utilisateur de les modifier par inadvertance.

La problématique particulière à l'invention est donc le traitement des comptes à privilèges dont le contexte général a été rappelé dans ce qui précède.

Les systèmes informatiques modernes utilisent souvent plusieurs comptes privilégiés pour fournir un accès sécurisé aux ressources informatiques. Les différents types de comptes privilégiés peuvent être mis en œuvre par un système unique pour fournir des rôles différents et / ou des niveaux d'accès. Par exemple, un compte d'utilisateur peut bénéficier de droits différents d'un compte administrateur.

En raison de la grande variété de types et / ou de rôles, la gestion des informations d'identification et / ou la sécurisation de la multitude de comptes est fastidieuse. En outre, la visualisation et / ou l'affichage de ces comptes de manière significative peut devenir contrainte.

Les comptes à privilèges, par exemple les comptes administrateurs, sont définis initialement dans le domaine géré par le proxy, par exemple le domaine Windows, pour une ou plusieurs machines.

### Etat de la technique

L'association d'une machine du système à un utilisateur ayant les droits nécessaires et suffisants pour s'y connecter se fait habituellement par une interface homme machine du proxy de sécurisation des accès, permettant d'organiser l'association entre les différents comptes à privilèges et les différentes machines-cibles.

Cette interface permet d'alimenter les différents comptes à privilèges manuellement à l'aide d'un formulaire, ou par téléchargement d'un fichier de comptes. Cette interface permet aussi d'alimenter les différentes machines manuellement à l'aide d'un formulaire, ou par téléchargement d'un fichier.

On procède ensuite à un appariement entre les comptes à privilèges et les machines par une intervention manuelle de l'opérateur selon son propre discernement. Cette étape se traduit par la création de quelques centaines d'associations. Ensuite, à chaque déclaration d'une nouvelle machine, l'opérateur créé une nouvelle association avec un ou plusieurs comptes à privilèges.

On connaît aussi dans l'état de la technique la demande de brevet américain US20150200943 décrivant une solution permettant d'associer rétroactivement une ou plusieurs politiques d'accès à un compte qui n'est pas associé à au moins une politique d'accès. En associant une politique d'accès à un compte, la gestion de l'accès à une ou plusieurs ressources fournies par le compte peut être automatisée en fonction de la politique d'accès associée. Un système de gestion de l'identité (IDM) peut gérer les politiques d'accès pour déterminer l'accès aux ressources des systèmes cibles. Les comptes qui ne sont pas associés à une politique d'accès peuvent être associés aux politiques d'accès régissant l'accès aux ressources identifiées par ces comptes. L'accès à la (les) ressource (s) associée (s) à ces comptes peut être mis à jour en fonction de l'accès accordé par les politiques d'accès associées à ces comptes.

On connaît aussi le brevet US5768519 qui propose une solution de fusion d'un domaine source et d'un domaine cible dans un réseau, consistant à remplacer une première identification de compte pour chaque compte associé au domaine source par une deuxième identification de compte associée au domaine cible. Ensuite, pour chaque compte associé au domaine source, la première identification de compte est ajoutée à une structure de données de sécurité de compte qui stocke des identifications de compte avec lesquelles le compte a déjà été associé lorsqu'il est associé à un ancien domaine fusionné.

On connaît aussi la demande de brevet US20150271200 une autre solution de gestion de comptes pour résister contre certaines attaques dites « juste-à-temps », comprenant un élément de gestion de compte conçu pour recevoir une requête à partir d'un premier compte par l'intermédiaire d'un dispositif client pour un second compte afin d'accéder à un dispositif de serveur dans un ensemble de dispositifs de serveur, un élément d'autorisation de compte pour autoriser la requête pour le second compte sur la base, au moins en partie, d'informations de compte associées au premier compte, un élément d'approvisionnement de compte conçu pour approvisionner le second compte pour permettre à un client d'accéder au dispositif de serveur, et un élément de notification de compte conçu pour fournir des informations de compte associées au second compte à un client par l'intermédiaire du dispositif client. D'autres modes de réalisation sont décrits et revendiqués.

### Inconvénients de l'art antérieur

La demande de brevet US20150200943 décrit une solution permettant d'associer rétroactivement une ou plusieurs politiques d'accès à un compte qui n'est pas associé à au moins une politique d'accès.

Il s'agit donc d'un contexte totalement différent de celui de l'invention, qui concerne au contraire la gestion de comptes déjà associés à une politique d'accès, et plus précisément la gestion des seuls comptes à privilèges.

La solution proposée par la demande de brevet US20150200943 implique la recherche d'un grand nombre de comptes, à savoir la totalité des comptes utilisateurs, et le traitement de ce grand nombre de comptes sans aucune distinction entre les comptes utilisateurs « ordinaires » et les comptes disposant en outre de privilèges.

### Solution apportée par l'invention

Le but de la présente invention est de proposer une solution pour associer une machine distante au compte à privilèges le plus approprié de manière automatique.
La présente invention est définie par les revendications 1-4.

A cet effet, l'invention concerne un procédé d'alimentation automatique d'un proxy de sécurisation d'accès à partir des données de comptes à privilèges caractérisé en ce qu'il comporte :
- une étape d'exploration par un robot d'au moins un domaine pour identifier les comptes à privilèges
- une étape de filtrage des comptes à privilèges sur la base de critères
- une étape d'alimentation du proxy avec les données recueillies.

De préférence, le procédé comporte en outre les étapes suivantes :
- des étapes d'extraction des caractéristiques des comptes à privilèges identifiés
- des étapes d'exploration des logs d'activité des machines explorées par chacun des comptes à privilèges identifiés et des associations entre les machines explorées et le compte d'utilisation le plus pertinent.

Selon une première variante, les données des comptes à privilèges recueillies sont enregistrées dans un fichier destiné à l'alimentation du proxy.

Selon une deuxième variante, les données des comptes à privilèges recueillies alimentent directement le proxy par une interface de programmation applicative.

### Description détaillée d'un exemple non limitatif de l'invention

La présente invention sera mieux comprise à la lumière de la description détaillée d'un exemple non limitatif de l'invention qui suit, se référant aux dessins annexés où :
- la figure 1 représente l'architecture matérielle générale d'un système informatique
- la figure 2 représente l'architecture matérielle d'un système informatique selon l'invention

### Contexte de l'invention

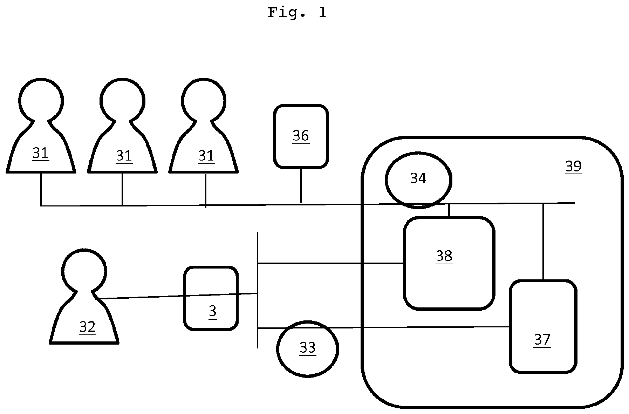

La figure 1 représente une vue schématique d'un système d'information, par exemple le système d'information d'une entreprise ou d'une organisation.

Les utilisateurs « ordinaires » (31) disposent de droits d'accès simples permettant de consulter des données dans un espace mémoire qui leur est accessible ou d'exécuter des applications enregistrées sur un serveur (39) par l'intermédiaire, par exemple, d'une application (36) de type « Internet Download Manager (IDM) » qui permet de gérer les téléchargements de contenus du serveur (39) via internet.

Une catégorie particulière d'utilisateurs (32) disposent de comptes à privilèges permettant en outre d'effectuer des tâches d'administration, par exemple modifier les droits des utilisateurs ordinaires (31) ou créer de nouveaux comptes utilisateurs, ou de modifier un programme ou d'installer ou de retirer un programme.

Ces utilisateurs (32) accède à la fois aux ressources communes en utilisant une session normale (38), et, occasionnellement, à une session avec un compte à privilège (37), via un proxy (3) et un réseau d'administration (33) distinct du réseau de production (34).

La passerelle proxy fonctionne comme une passerelle réseau : elle est placée entre le client et le serveur et inspecte le trafic au niveau de l'application. L'accès total au trafic inspecté donne à la passerelle un contrôle sur les fonctions du protocole et permet de restreindre ou autoriser l'accès à certains canaux spécifiques du protocole, activer des sessions terminales dans SSH mais désactiver le transfert de ports ou de fichiers, ou bien encore autoriser l'accès au bureau pour le protocole de bureau à distance mais désactiver le partage de fichiers et d'imprimantes.

Les passerelles proxy peuvent fonctionner de manière transparente dans le réseau et sont indépendantes du client et du serveur surveillé. Cela empêche quiconque de modifier les informations d'audit extraites puisque les administrateurs du serveur n'ont pas accès à la passerelle proxy. Certaines solutions permettent même de stocker les pistes d'audit au format crypté, horodaté et signé numériquement afin que même l'administrateur de la passerelle ne puisse pas altérer les pistes d'audit. De par leur transparence, les passerelles proxy ne requièrent que des modifications minimes de l'environnement informatique existant. Comme elles se situent au niveau du réseau, les utilisateurs peuvent continuer d'utiliser les applications clients auxquelles ils sont habitués sans modifier leurs habitudes de travail. Les passerelles proxy peuvent réellement intervenir dans le trafic, de par leur position centrale par rapport au trafic réseau surveillé. Cela permet, par exemple, de demander à l'utilisateur de s'authentifier sur la passerelle, ou de stopper la connexion jusqu'à son autorisation par une personne compétente. Le travail de l'utilisateur peut être surveillé en temps réel, grâce aux rapports de trafic vers la personne responsable. Il est également possible d'extraire les fichiers transférés vers le serveur et de les stocker avec les pistes d'audit, afin de les visionner ultérieurement.

L'invention concerne l'alimentation automatique du proxy (3).

### Description de l'invention

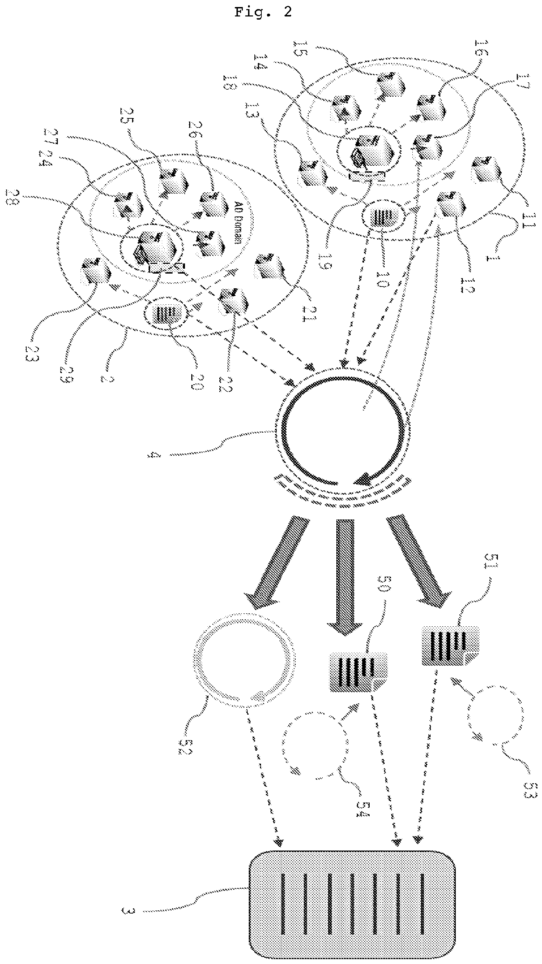

Le système informatique selon l'exemple illustré par la figure 2 comprend deux périmètres d'exploration (1, 2) constitués par un ensemble de machines (11 à 18 ; 21 à 28) reliées par un réseau informatique, par exemple Ethernet ou Internet.

Dans chacun des périmètres d'exploration (1, 2), l'une des machines (18, 28) assure des fonctionnalités de serveur d'annuaire, par exemple, sous Windows (marque déposée), par l'intermédiaire de Active Directory (marque déposée). L'annuaire (19, 29) recense l'ensemble des machines respectivement (14 à 18 et 24 à 28) du domaine (1, 2) et les informations relatives aux comptes du domaine considéré (1, 2).

L'annuaire (19, 29) comprend l'enregistrement d'une part d'une liste de comptes constitués d'informations telles que l'identifiant d'un utilisateur, des informations sur son identité, sur son appartenance à un groupe, ainsi que des informations relatives à ses privilèges, par exemple d'administration.

L'annuaire (19, 29) comprend l'enregistrement d'autre part d'une autre liste, distincte de la liste de comptes, constituée par des informations telles que l'identifiant d'une machine et ses caractéristiques techniques.

Ces deux listes sont indépendantes, sans relations fonctionnelles recensées dans l'annuaire.

Chacune des machines d'un domaine peut en outre présenter des comptes à privilèges purement locaux non connus du domaine et donc non enregistrés dans l'annuaire (19, 29).

Le problème résolu par l'invention concerne l'association de ces machines aux comptes à privilèges les plus appropriés et donc à créer des relations entre les deux listes de comptes et de machines, afin de permettre l'alimentation automatique des accès proposés par un proxy (3) de sécurisation de connexions à distance.

A cet effet, l'invention (4) consiste à exécuter, sous le contrôle d'un opérateur à partir d'une interface homme-machine, ou en ligne de commande textuelle, une auto-découverte des comptes à privilèges et des machines enregistrés dans les différents domaines (1, 2) et une auto-déduction de l'appariement le plus approprié des comptes à privilèges et des machines de chacun des domaines (1, 2).

Pour cela, on exécute sur l'une des machines (14 à 18 ; 24 à 28) de chacun des domaines (1, 2) un robot procédant à l'interrogation de l'annuaire (19, 29) pour récupérer la liste des identifiants des utilisateurs appartenant à des groupes indiqués comme étant à privilèges et l'identifiant de toutes les machines du domaine (1, 2) correspondant. Ces informations sont enregistrées dans une mémoire temporaire. Pour les machines (11 à 13 ; 21 à 23) du domaine qui ne sont pas recensées dans l'annuaire (19, 29), ces informations résultant de l'étape d'interrogation de l'annuaire par le robot sont complétées à partir d'un fichier indépendant (10, 20) au format XML enregistré parallèlement à l'étape d'interrogation des machines enregistrées dans l'annuaire (19, 29).

Le robot (4) exécute ensuite une connexion distante à chacune des machines identifiées lors de l'étape précédente, et procède à une interrogation pour récupérer les informations de droits relatives aux comptes à privilèges pour la machine considérée, identifier des comptes à privilèges purement locaux à la machine ainsi que récolter les informations correspondant aux journaux d'activité.

Ces informations sont également enregistrées dans une mémoire temporaire.

Le mode de connexion à distance par ce robot s'appuie sur les fonctionnalités Windows API (marque déposée) afin de garantir la préservation de la sécurité.

On procède ensuite à un traitement de filtrage sur les informations ainsi collectées à partir de paramètres définissant un sous-ensemble de comptes à privilèges. Ces paramètres sont par exemple :
- l'appartenance à un groupe standard
- l'appartenance à un groupe défini par son nom
- le bénéfice d'un privilège prédéterminé.

Le filtre peut combiner plusieurs paramètres par des opérateurs logiques.

On procède ensuite au calcul d'une association optimale entre les machines et les comptes retenus à l'issue de l'étape de filtrage. Ce calcul prend en compte les données des journaux d'activités pour déterminer les meilleures combinaisons, par exemple par la pondération par le nombre de connexions du compte sur une machine, ou la date de la connexion la plus récente du compte sur ladite machine.

A l'issue de ces étapes, le robot fournit :
- un ensemble de fichiers au format .csv permettant l'alimentation du proxy assurant la connexion sécurisée (50)
- un ensemble de fichiers dont le modèle est paramétrable par l'opérateur (51)
- une alimentation automatique du proxy (3) par une interface de programmation applicative dédiée (52).

En outre, dans le cas de la génération de fichiers, l'opérateur peut définir une commande à exécuter à l'issue de la production du fichier (53, 54).

## Revendications

1. Procédé d'alimentation automatique d'un proxy de connexion sécurisée (3) à des cibles distantes (37) à partir de données de comptes à privilèges, **caractérisé en ce qu'**il comporte :
• une étape d'exploration par un robot d'au moins un domaine (1, 2) doté d'un annuaire (19, 29) pour identifier les comptes à privilèges (32), l'annuaire comprenant d'une part l'enregistrement d'une liste de comptes constitués d'informations telles que l'identifiant d'un utilisateur, des informations sur son identité, sur son appartenance à un groupe, ainsi que des informations relatives à ses privilèges, l'annuaire comprenant d'autre part l'enregistrement d'une autre liste, distincte de la liste de comptes, constituée par des informations telles que l'identifiant d'une machine et ses caractéristiques techniques,
le robot procédant à l'interrogation de l'annuaire pour récupérer la liste des identifiants des utilisateurs appartenant à des groupes indiqués comme étant à privilèges et l'identifiant de toutes les machines du domaine (1, 2),
le robot (4) exécutant ensuite une connexion distante à chacune des machines identifiées lors de l'étape précédente, et procédant à une interrogation pour récupérer les informations de droits relatives aux comptes à privilèges pour la machine considérée, identifier des comptes à privilèges purement locaux à la machine ainsi que récolter les informations correspondant aux journaux d'activité,
• une étape de filtrage sur les informations collectées lors de l'étape précédente, à partir de paramètres définissant un sous-ensemble de comptes à privilèges, à l 'issue de laquelle des comptes à privilèges sont retenus;
• une étape de calcul d'une association optimale entre les machines et les comptes à privilèges retenus à l'issue de l'étape de filtrage, l'étape de calcul prenant en compte les informations correspondant aux journaux d'activités;
• une étape d'alimentation du proxy avec les données de comptes à privilèges retenus.

2. Procédé d'alimentation automatique d'un proxy selon la revendication 1, comportant en outre :
• des étapes d'exploration des logs d'activité des machines explorées par chacun des comptes à privilèges (32) retenus et des associations entre les machines explorées et le compte d'utilisation le plus pertinent,
• une étape d'alimentation du proxy avec les données recueillies.

3. Procédé d'alimentation automatique d'un proxy selon la revendication 1 ou 2, dans lequel les données des comptes à privilèges (32) retenus sont enregistrées dans un fichier destiné à l'alimentation du proxy.

4. Procédé d'alimentation automatique d'un proxy selon la revendication 1 ou 2, dans lequel les données des comptes à privilèges retenus alimentent directement le proxy par une interface de programmation applicative d'entrée.

## Patentansprüche

1. Verfahren zum automatischen Einspeisen aus Daten privilegierter Konten in einen Proxy für sichere Verbindungen (3) zu entfernten Zielen (37), das **dadurch gekennzeichnet ist, dass** es Folgendes umfasst:
• einen Schritt der Durchsuchung durch einen Roboter mindestens einer mit einem Verzeichnisdienst (19, 29) ausgestatteten Domäne (1, 2), um die privilegierten Konten (32) zu bestimmen, wobei der Verzeichnisdienst einerseits den Datensatz einer Liste von Konten umfasst, der aus Informationen, wie der Kennung eines Benutzers, Informationen über seine Identität, über seine Zugehörigkeit in einer Gruppe sowie Informationen über seine Privilegien, zusammengesetzt ist, und das Verzeichnis anderseits auch den Datensatz einer anderen, von der Liste der Konten verschiedenen Liste umfasst, die aus Informationen, wie der Kennung einer Maschine und ihren technischen Eigenschaften, zusammengesetzt ist,
wobei der Roboter mit der Abfrage des Verzeichnisdienstes fortfährt, um die Liste der Kennungen der zu als privilegiert gekennzeichneten Gruppen gehörenden Benutzer und die Kennung aller Maschinen in der Domäne (1, 2) abzurufen; wobei der Roboter (4) sodann eine Fernverbindung zu jeder der während des vorangegangenen Schritts bestimmten Maschinen ausführt und mit einer Abfrage fortfährt, um die Informationen zu den Rechten für die Konten, die für die betreffende Maschine privilegiert sind, abzurufen, Konten mit rein lokal für die Maschine geltenden Privilegien zu bestimmen sowie die den Aktivitätsprotokollen entsprechenden Informationen zusammenzutragen,
• einen Schritt der Filterung der während des vorangegangenen Schritts gesammelten Informationen anhand von eine Teilmenge privilegierter Konten definierenden Parametern, an dessen Ende privilegierte Konten zurückbehalten werden;
• einen Schritt der Berechnung einer optimalen Zuordnung der Maschinen und der am Ende des Filterungsschritts zurückbehaltenen, privilegierten Konten zueinander, wobei der Schritt der Berechnung die den Aktivitätsprotokollen entsprechenden Informationen berücksichtigt;
• einen Schritt der Einspeisung der Daten der zurückbehaltenen, privilegierten Konten in den Proxy.

2. Verfahren zum automatischen Einspeisen in einen Proxy nach Anspruch 1, ferner Folgendes umfassend:
• Schritte eines Durchsuchens der Aktivitätsprotokolle der Maschinen, die von jedem der zurückbehaltenen, privilegierten Konten (32) durchsucht wurden, und der Zuordnungen der durchsuchten Maschinen und dem relevantesten Verwendungskonto zueinander,
• einen Schritt der Einspeisung der erhaltenen Daten in den Proxy.

3. Verfahren zum automatischen Einspeisen in einen Proxy nach Anspruch 1 oder 2, wobei die Daten der zurückbehaltenen, privilegierten Konten (32) in einer zur Einspeisung in den Proxy vorgesehenen Datei aufgezeichnet sind.

4. Verfahren zum automatischen Einspeisen in einen Proxy nach Anspruch 1 oder 2, wobei die Daten der zurückbehaltenen, privilegierten Konten über eine Eingabeanwendungsprogrammierschnittstelle direkt in den Proxy eingespeist werden.

## Claims

1. A method for automatically supplying a secure connection proxy (3) with remote targets (37) on the basis of privileged account data, **characterized in that** it includes:
- a step of exploring, by a robot, at least one domain (1, 2) with directory (19, 29) for identifying the privileged accounts (32), the directory comprising, on the one hand, the recording of a list of accounts made up of information such as the identifier of a user, information on his identity, on his belonging to a group, as well as information relating to his privileges, the directory comprising, on the other hand, the saving of another list, different from the list of accounts, consisting of information such as the identifier of a machine and the technical characteristics thereof,
querying the directory (19, 29) to retrieve the list of identifiers of users belonging to groups indicated as having privileges and the identifier of all the machines in the corresponding domain (1, 2),
the robot (4) then performs a remote connection to each of the machines identified in the previous step, and performs a query to retrieve privileged account right information for the machine considered, identify purely local privileged accounts with the machine, and gather the corresponding activity log information,
- a filtered step on the information gathered during the previous step, based on parameters that define a subset of privileged accounts, after which privileged accounts are selected,
- a step of calculation of an optimal association between the machines and the accounts selected upon completion of the filtering step, this calculation taking into account the data from the activity logs,
- a step of supplying the proxy with the selected privileged account data (3).

2. A method for automatically supplying a proxy according to claim 1, wherein it also includes
- steps for exploring the activity logs of the machines explored by each of the selected privileged accounts (32) and associations between the machines explored and the most relevant usage account,
- a step of supplying the proxy with the gathered data.

3. A method for automatically supplying a proxy according to claim 1 or 2, wherein the selected privileged accounts (32) are recorded in a file intended for supplying the proxy.

4. A method for automatically supplying a proxy according to claim 1 or 2, wherein the data from the selected privileged accounts directly supplies the proxy through an input application programming interface.
